# EUROPÄISCHE PATENTSCHRIFT

(11) **EP 0 762 387 B1**
(45) Veröffentlichungstag und Bekanntmachung des Hinweises auf die Patenterteilung: **17.03.2004**
(21) Anmeldenummer: 96113052.3
(22) Anmeldetag: 14.08.1996
(51) Int. Cl.: G11B 5/008, G11B 15/02

(54) **Magnetbandgerät für die Aufzeichnung und Wiedergabe von Signalen**
Magnetic tape apparatus for recording and reproducing of signals
Appareil à bande magnétique pour enregistrement et reproduction des signaux

(30) Priorität: 23.08.1995 DE 19531075
(43) Veröffentlichungstag der Anmeldung: 12.03.1997
(73) Patentinhaber: DEUTSCHE THOMSON-BRANDT GMBH, 78048 Villingen-Schwenningen (DE)
(72) Erfinder: Scholz, Werner, 30989 Gehrden (DE); Streckenbach, Wulf-Christian, 30966 Hemmingen (DE); Bachnick, Werner, 30455 Hannover (DE); Wessolly, Bernd, 30966 Hemmingen (DE); Vössing, Walter, 30455 Hannover (DE); Schröder, Ernst F., 30655 Hannover (DE); Peters, Hartmut, 30890 Barsinghausen (DE); Timmermann, Friedrich, 30823 Garbsen (DE); Meunier, Paul-Louis, 75012 Paris (FR); Artigalas, Max, 78150 Le Chesnay (FR)
(74) Vertreter: Albert, Claude

(56) Entgegenhaltungen:
- EP-A- 0 277 564
- EP-A- 0 309 298
- EP-A- 0 332 395
- EP-A- 0 469 931
- EP-A- 0 597 726
- DE-A- 2 625 695
- DE-A- 3 516 592
- DE-C- 4 135 220
- DE-U- 9 320 517
- GB-A- 2 005 458
- US-A- 4 967 906
- IBM TECHNICAL DISCLOSURE BULLETIN, Bd. 15, Nr. 6, November 1972, NEW YORK, US, Seite 1886 XP002021313 R.N. HYLAND ET AL.: "Multitrack Transducer With Track Selectivity. November 1972."
- PATENT ABSTRACTS OF JAPAN vol. 008, no. 228 (P-308), 19.Oktober 1984 & JP 59 107439 A (HITACHI SEISAKUSHO KK), 21.Juni 1984,

## Beschreibung

Es ist bekannt durch einen Matrixkopf große Mengen digitaler Daten mit außerordentlich hoher Bitrate, d.h. in kürzester Zeit, auf ein Magnetband aufzuzeichnen (Siehe EP-A-0 277 564 (Anmeldungsnummer: EP 89 401 125.3)). Dank des Matrixkopfes, der die Aufzeichnung einer Vielzahl paralleler Spuren ohne Rasen ermöglicht, kann mit dem feststehenden Kopf die gleiche Aufzeichnungsdichte wie bei Schrägspuraufzeichnung erreicht werden.

Da die Relativgeschwindigkeit zwischen Band und Kopf bei der Längsspuraufzeichnung mit einer Vielzahl paralleler Spuren gering ist, muß die Abtastung bei der Wiedergabe mit Wandlern erfolgen, die eine geschwindigkeitsunabhängige Signalspannung liefern. Das sind z.B. magnetoresistive Köpfe, oder Köpfe die den magnetooptischen Kerreffekt ausnutzen. Eine Abtastvorrichtung für eine Vielzahl paralleler Spuren, bei der ein Laserstrahl durch die Magnetisierung der nebeneinanderliegenden Spuren moduliert und auf eine CCD-Zeile projiziert wird, und zwar in der Weise, daß jedes Pixel der CCD-Zeile das durch die Magnetisierungsänderungen einer einzelnen Spur modulierte Licht empfängt ist in EP 89401125.3 beschrieben.

Die Anzahl der Pixel der CCD-Zeile kann auch größer als die Anzahl der gleichzeitig abgetasteten Spuren sein, so daß mit der CCD-Zeile eine Übertastung der nebeneinanderliegenden Spuren erfolgt. Durch digitale Filterung können dann die Signale der einzelnen Spuren getrennt werden, ohne daß eine exakte Spurführung erforderlich ist. Die Grobeinstellung auf einen bestimmten Spurbereich wird dadurch ermöglicht, daß die CCD-Zeile so ausgelegt ist, daß sie einen vergrößerten Spurbereich erfaßt, und die Auswahl des gewünschten Spurbereichs mit elektronischen Mitteln erfolgt.

Die Genauigkeitsanforderungen an die zur Auswahl verschiedener Spurbereiche erforderliche Kopfverschiebungsmechanik können dadurch wesentlich vermindert werden.

Die aus der CCD-Zeile ausgetaktete Signalspannung, stellt die Binärwerte der in den parallelen Spuren nebeneinanderliegenden Bitzellen dar. Durch geeignete Synchroninformationen kann mit Mitteln der digitalen Signalverarbeitung das ursprünglich aufgezeichnete Signal wiederhergestellt werden.

Der Erfindung liegt die Aufgabe zugrunde, diese Aufzeichnungsund Wiedergabemöglichkeiten für ein handliches Magnetbandgerät auszunutzen. Diese Aufgabe wird durch die im Anspruch 1 angegebenen Merkmale der Erfindung gelöst. Vorteilhafte Weiterbildungen der Erfindung sind in den Unteransprüchen angegeben.

Das erfindungsgemäße Gerät ist für die Speicherung sehr großer Mengen von Tonsignalen gedacht, die nach Datenreduktion als Digitalsignal aufgezeichnet sind. Das Gerät soll als tragbares Wiedergabegerät eingesetzt werden und bei Abmessungen, die nur unwesentlich größer als eine handelsübliche Magnetbandkassette sind, den Zugriff auf Musikstücke, die z.B. dem Inhalt von ca. 200 CD's entsprechen, ohne Bandwechsel ermöglichen. Der Vorteil des erfindungsgemäßen Gerätes besteht in der Möglichkeit, große Datenmengen in kürzester Zeit aufzuzeichnen, da mit dem Matrixkopf z.B. 512 parallele Spuren gleichzeitig aufgezeichnet werden, wobei für jede einzelne Spur eine sehr hohe Bitrate übertragen werden kann.

Diese Schnellaufzeichnung kann allerdings nur mit speziellen externen Aufzeichnungseinrichtungen durchgeführt werden, da das tragbare Magnetbandgerät weder das Aufzeichnungssignal mit der erforderlichen Bitrate erzeugen kann noch in der Lage ist, die Energie für den schnellen Bandtransport zu liefern.

Es muß daher dafür gesorgt werden, daß die Benutzer der erfindungsgemäßen Magnetbandgeräte die Möglichkeit haben, an speziellen Aufzeichnungsstationen z.B. den Inhalt einer Auswahl von CD's gegen eine Gebühr in ihrem Gerät zu speichern. Bei einer Datenreduktion, die noch keinen merklichen Qualitätsverlust zur Folge hat, kann der Inhalt einer CD auf ca 1,5 m 1/4"-Band untergebracht werden, so daß für 200 CD's eine Bandlänge von ca. 300 m erforderlich ist.

Bei einer Bandgeschwindigkeit von 5 bis 6 cm/s erfordert das Bespielen der für den Inhalt einer CD benötigten Bandlänge von ca. 1,5 m weniger als 30 s. Das Signal der aufzuzeichnenden CD's ist nach Datenreduktion, Aufteilung in Signalabschnitte und zeitliche Umsortierung dieser Abschnitte in einem Massenspeicher abgelegt. Die zeitliche Umsortierung der Signalabschnitte ist erforderlich, da der Wiedergabekopf nur jeweils einen Teil aller parallelen Spuren, z.B. 1/8 von 512 d.h. 64 Spuren, abtastet. Dadurch wird der Aufwand für den Wiedergabekopf vermindert und für eine Herabsetzung der Datenrate bei der Wiedergabe gesorgt. Ein derartiger gleichzeitig abgetasteter Spurbereich wird später in diesem Text als Makrospur bezeichnet. Die Aufzeichnung des Inhalts einer CD in einem begrenzten Bandbereich ermöglicht einen schnellen Zugriff jeweils innerhalb einer CD.

Sofern das erfindungsgemäße Gerät auch mit einem eigenen Matrixkopf für die Aufzeichnung ausgerüstet ist, können außer der Schnellaufzeichnung an der Aufzeichnungsstation auch eigene Aufzeichnungen in Echtzeit und Aufzeichnungen durch Kopieren von Gerät zu Gerät vorgenommen werden. Es ist sinnvoll, den eigenen Aufzeichnungskopf für die gleich Spurzahl wie den Wiedergabekopf einzurichten. Wenn z.B. beide Köpfe für 64 Spuren, d.h. 1/8 der auf dem Band befindlichen Spuren, eingerichtet sind, dann erfordert das Kopieren von Gerät zu Gerät die 8-fache Zeit der Schnellaufzeichnung an der externen Aufzeichnungseinrichtung. Das Kopieren einer vollständigen CD erfordert dann einschließlich der zwischen den einzelnen Makrospuren erforderlichen Rücklaufzeiten ca. 5 min.

Da die Bandgeschwindigkeit bei der Wiedergabe nicht beliebig vermindert werden kann, ist ein Start/Stop-Betrieb des Bandes vorgesehen. Die hierbei abgetasteten zeitkomprimierten Signalabschnitte werden mit Hilfe eines Pufferspeichers in den für die Tonwiedergabe erforderlichen kontinuierlichen Signalfluß umgewandelt.

Die Aufzeichnung in Echtzeit muß ebenfalls im Start/Stop-Betrieb erfolgen. Hierbei dient der Pufferspeicher zur Zeitkompression des kontinuierlichen Tonsignals, das dann in zeitlich getrennten Abschnitten aufgezeichnet wird.

Die Erfindung wird im folgenden anhand der Zeichnungen erläutert. Darin zeigen:
- Fig. 1: die Schnellaufzeichnung an der Aufzeichnungsstation,
- Fig. 2: ein Blockschaltbild für die Aufzeichnung in Echtzeit,
- Fig. 3: ein Blockschaltbild für die Schnellkopierfunktion
- Fig. 4-11: Abtastmöglichkeiten bei verschiedenen Aufzeichnungsformaten.

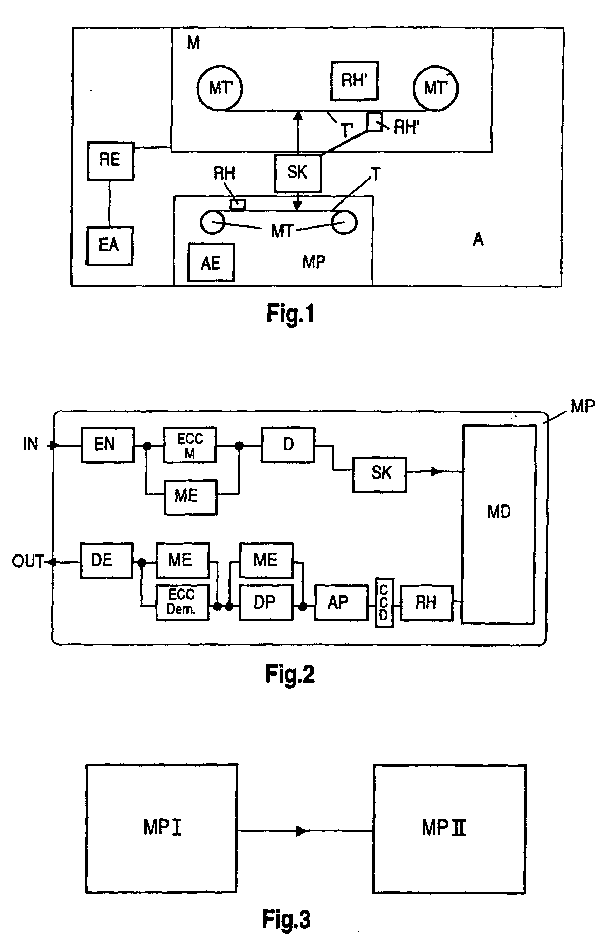

Fig. 1 zeigt eine Darstellung der Datenübertragung von einer externen Aufzeichnungseinrichtung auf das erfindungsgemäße Magnetbandgerät MP. Das Magnetbandgerät MP weist einen Lesekopf RH, ein Magnetband T und eine Auswerteelektronik AE auf. Die Aufzeichnungseinrichtung A beinhaltet eine Aufnahmeelektronik RE, einen Massenspeicher M, einen Lesekopf RH', ein Magnetband T' und einen Schreibkopf SK.

Die Magnetbänder befinden sich auf den Bandtellern MT bzw. MT'. Das Magnetband T bzw. T' bewegt sich in Längsrichtung zum Schreibkopf SK. Zum Bespielen des Magnetbandgerätes MP wird dieses in das Aufzeichnungsgerät A eingeführt. Beim Abspielen des Magnetbandes T' gelangen die Daten über den Lesekopf RH' zum Schreibkopf SK, der die Daten auf das in Längsrichtung bewegte Band T aufzeichnet. Eine Aufnahmeelektronik RE steuert die zu überspielenden Daten und die Datenmenge. Der Benutzer kann zuvor über eine Eingabeeinheit EA die gewünschten Daten auswählen. Nach diesem Vorgang kann das Magnetbandgerät MP entnommen werden. Es ist nun möglich über eine Auswerteelektronik AE die Daten des Magnetbandes T mit Hilfe des Lesekopfes auszulesen.

Fig. 2 zeigt das erfindungsgemäße Magnetbandgerät MP mit eigener Aufzeichnungselektronik und eigenem Aufzeichnungskopf für die Aufzeichnung in Echtzeit. Das Eingangssignal das z.B. vom Digitalausgang eines CD-Spielers kommt, wird im Encoder EN z.B. nach dem MPEG-Verfahren datenreduziert. Durch die Fehlercodierung im Block ECC und eine Datenverschachtelung im Speicher ME wird die spätere Fehlerkorrektur ermöglicht. Sodann wird das Signal dem zur Aufzeichnung dienenden Matrixkopf SK über die Kopftreiber D zugeführt. Bei der Wiedergabe tastet der Kernkopf RH die parallelen Spuren des Bandes ab. Dabei wird Laserlicht in Abhängigkeit von der Magnetisierung in den Spuren moduliert und auf eine CCD-Zeile projiziert. Das aus der CCD-Zeile ausgetaktete Signal wird nach A/D-Wandlung im Block AP durch digitale Signalverarbeitung in den Blöcken DP und ME und Fehlerkorrektur sowie Entschachtelung in den Blöcken ECC und ME in das datenreduzierte Aufzeichnungssignal zurückverwandelt. Mit Hilfe der Dekodierschaltung DE wird daraus der ursprüngliche Eingangsdatenstrom wiederhergestellt.

Fig. 3 zeigt das prinzipielle Blockschaltbild für das überspielen von einem Magnetbandgerät MPI zum zweiten Magnetbandgerät MPII mit gleichem Aufzeichnungsformat.

Für die Aufzeichnung auf das Magnetbandgerät MP gibt es verschiedene Aufzeichnungsformate die im folgenden beschrieben werden.

Bei der Wiedergabe von auf Magnetband aufgezeichneten Signalen kann es erforderlich sein, eine an sich zusammenhängende Aufzeichnung in kurzen, zeitlich getrennten Abschnitten abzutasten.

Der Fall tritt z.B. ein, wenn bei Abtasten einer Längspuraufzeichnung mit einem oder mehreren parallelen Köpfen die Relativbewegung zwischen Band und Köpfen einen bestimmten Geschwindigkeitswert nicht unterschreiten darf. Die abtastungsbedingte Bitrate kann dann wesentlich höher sein als die für die Signalverarbeitung und Signalauswertung erforderliche Bitrate.

Das Signal wird sozusagen zeitkomprimiert geliefert und muß für die Verarbeitung mit Hilfe eines Pufferspeichers expandiert werden.

Wegen der begrenzten Speichergröße muß bei Signalen längerer Dauer eine Zerlegung in kurze, zeitlich getrennte Abschnitte erfolgen, wobei die Pause zwischen den Signalabschnitten durch die Verarbteitungsgeschwindigkeit bestimmt wird.

Für die Abtastung der einzelnen Abschnitte einer digitalen Aufzeichnung sind z.B. die folgenden beiden Forderungen zu erfüllen:
1. Die aufeinanderfolgenden Abschnitte sollen einander überlappen, da die auswertbaren Signalabschnitte aus gründen der Signalzuordnung mit vollständigen Syncblöcken beginnen und enden müssen und Einlaufbereiche für das Einschwingen der Signalverarbeitungsschaltung erforderlich sind.
2. Die Synchblöcke müssen fortlaufend numeriert sein, damit eine Doppelauswertung von Syncblöcken infolge der Signalüberlappungen vermeidbar ist.
3. Die Relativgeschwindigkeit zwischen Kopf und Band soll zwecks Erzeugung einer konstanten Abtastbitrate während der Abtastung eines Abschnitts konstant sein.

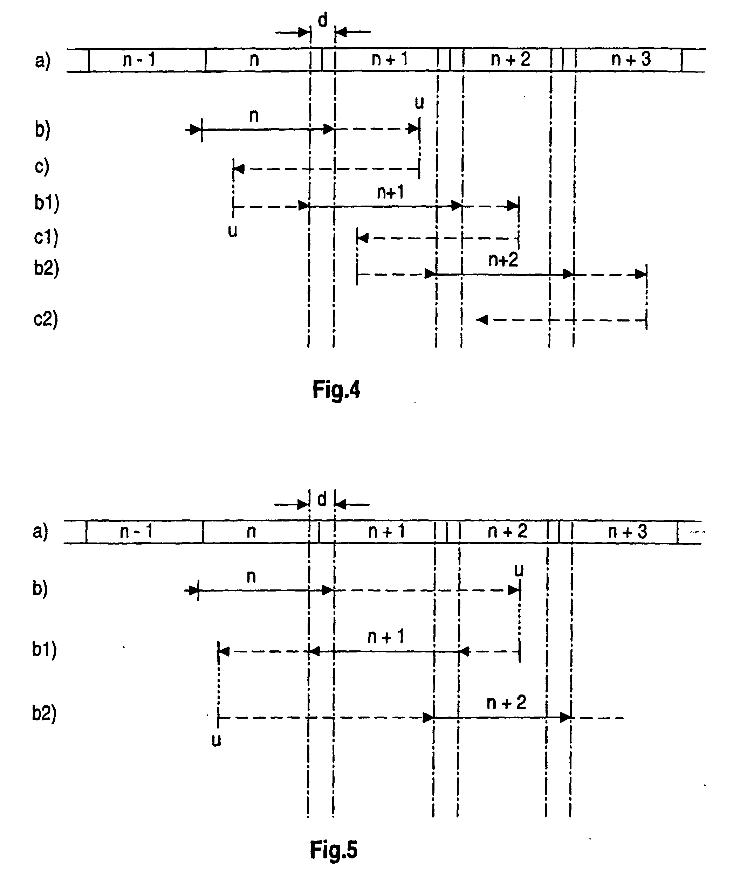

Fig. 4 stellt die Relativbewegungen zwischen Band und Abtastkopf dar, die zwecks Erfüllung der Forderungen durchzuführen sind. Fig. 4a zeigt die Aufteilung der Bandaufzeichnung in nacheinander abzutastende Abschnitte. Die Überlappungen sind mit d bezeichnet. Die Pfeile in den Zeilen b und c geben die Richtung der Relativbewegungen an. Die durchgezogenen Linien markieren Bandbereiche, die mit konstanter Geschwindigkeit abgestattet werden. Die gestrichelten Linien stellen Relativbewegungen mit veränderlicher Geschwindigkeit infolge Beschleunigung oder Abbremsung dar. An den Umkehrpunkten der Bewegungsrichtung u können zur Anpassung der Abtastvorgänge an den für die Signalverarbeitung erforderlichen Datenfluß Wartezeiten eingefügt werden.

Der durch Fig. 4 veranschaulichte Abtastvorgang weist gegenüber einer kontinuierlichen Bandabtastung folgende Nachteile auf:
1. Erhöhte Beanspruchung und damit Verschleiß des Bandmaterials und der zur Erzeugung der Relativbewegung zwischen Band und Abtastkopf dienenden Machanik.
2. Erhöhter Energieverbrauch
3. Erhöhte Geräuschentwicklung

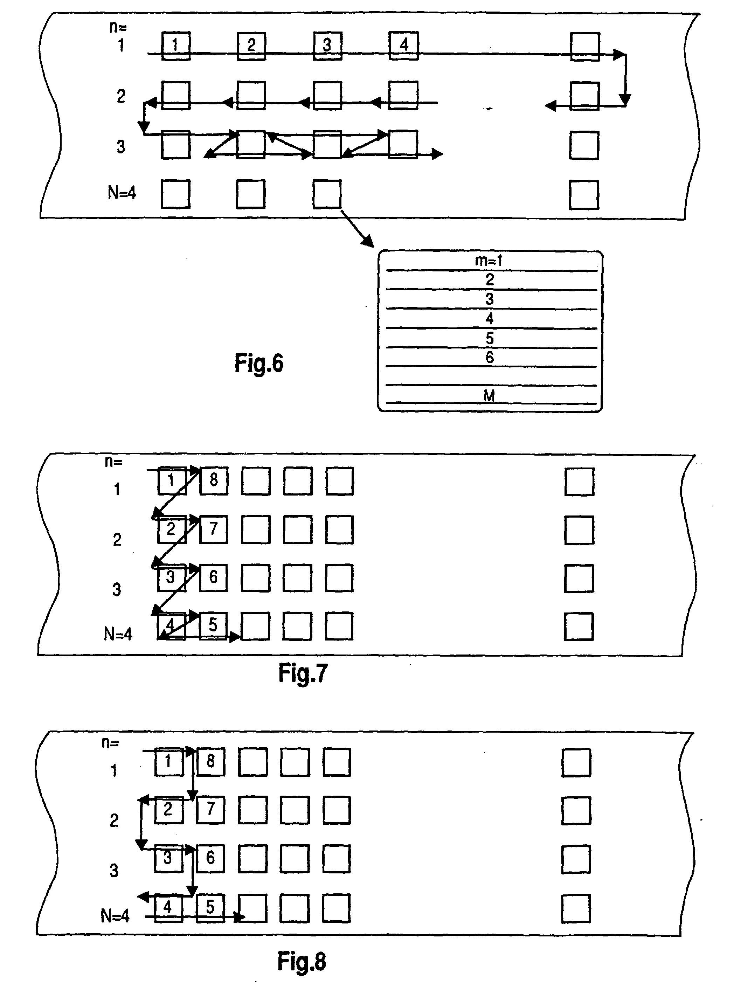

Wie Fig. 5 zeigt, wird durch die abwechselnde Abtastung aufeinanderfolgender Abschnitte in entgegengesetzter Richtung die Zahl der erforderlichen Hin- und Herbewegungen zwischen Band und Kopf halbiert. Damit wird auch die Auswirkung der genannten Nachteile halbiert.

Die Signale aus den in umgekehrter Richtung abgetasteten Abschnitten können mit Hilfe eines Speichers, bei dem Schreiben und Lesen in entgegengesetzter Richtung erfolgt, in die richtige Reihenfolge gebracht werden. Diese Umsortierung erfolgt zwecksmäßigerweise in der Wiedergabeschaltung. Die Umsortierung könnte auch vor der Aufzeichnung erfolgen. Dieses würde aber bedeuten, daß die Art der Abtastung, sowie die Lage und Größe der Abschnitte festgelegt ist.

Eine normale kontinuierliche Aufzeichnung kann dagegen in Beliebiger Weise bei der Wiedergabe in Abschnitte aufgeteilt werden.

Im folgenden wird eine Weiterbildung dargestellt, bei der die abschnittsweise Aufteilung bei der Wiedergabe durch das Aufzeichnungsformat vorgegeben ist:

Gerät zur magnetischen Aufnahme und Wiedergabe von als digitale Daten dargestellten Informationen auf einem flächenhaften, vorzugsweise bandförmigen, Aufzeichnungsträger, bei dem die magnetische Aufzeichnung spurförmig in Längsrichtung des Trägers auf mehreren N getrennten (Makro-)Spuren aufgebracht ist, welche jede ihrerseits wiederum aus M zusammen bearbeiteten Spuren bestehen, wobei die aus der Bandgeschwindigkeit v, der kleinsten nutzbaren Wellenlänge λ, und der Anzahl K der gleichzeitig geschriebenen oder gelesenen Spuren zu bestimmende verfügbare Datenrate erheblich höher ist als die für die Anwendung (z.B. digitaler Stereo-Ton) benötigte Datenrate.

### Beispiel:

| | |
|---|---|
| Trägerbreite a | 8 mm |
| Bandgeschwindigkeit v | 60 mm/s |
| Bitlänge a | 0.0003 mm |
| Spurbreite b | 0.01mm |
| Anzahl Spuren K | 64 |
| Anzahl Makro-Spuren N | 8 |

Daraus erhält man eine über eine längere Zeitdauer nutzbare Brutto-Datenrate von R₀ = K * v / a = 64 * 60 / 0.0003 = 12.8 Mbit/s. Die für eine Aufzeichnung von digitalem Stereo-Ton erforderliche Datenrate beträgt dagegen (sogen. CD Format) nur R₁=2*44100*16=1.41 Mbit/s, oder gar bei einer datenreduzierenden Codierung (z.B. nach ISO/IEC 11172-3, Layer II) nur R₂=256 kbit/s.

Als Folge dieser Diskrepanz kann die Aufzeichnung und Wiedergabe nicht in der an sich bekannten Form der kontinuierlichen 'Serpentinen-Methode' erfolgen. Hierbei wird die Aufzeichnung oder Wiedergabe entlang einer Makro-Spur vom Bandanfang zum Bandende durchgeführt, danach die Aufzeichnungs- und Wiedergabemittel in geeigneter Weise auf eine weitere Makro-Spur positioniert und diese dann in umgekehrter Richtung vom Ende zum Anfang bearbeitet. Genausogut ist es möglich, das Band zwischenzeitlich zurückzuspulen und die Bearbeitung in der weiteren Makro-Spur ebenfalls vom Anfang zum Ende durchzuführen. Der zusätzliche Spulvorgang kostet aber unnötig Energie, was z.B. bei einem tragbaren Gerät von großem Nachteil ist.

Andererseits ergibt sich sowohl aus dem Unterschied zwischen Brutto-Datenrate und Nutzdatenrate als auch aus dem gleichzeitigen Vorhandensein von N Makro-Spuren die Möglichkeit, eine Aufzeichnung oder Wiedergabe mit hoher Zeitkompression durchzuführen. Durch kontinuierliches Bearbeiten einer Makro-Spur allein kann eine Zeitkompression von bis zu R₀/R₂, unter Zuhilfenahme der N Makro-Spuren bis zu N*R₀/R₂ erreicht werden. Mit den o.a. Werten kann man so z.B. die Dauer einer Aufzeichnung oder Wiedergabe der Musik von einer in 'Echtzeit' 74 min dauernden CD auf Werte unter 30 sec bringen (wobei man man zusätzliche Daten für Fehlerschutz und Übergangszonen berücksichtigen muß).

### Langsamere Geschwindigkeit

Zunächst besteht die Möglichkeit, die Bandgeschwindigkeit entsprechend der gewünschten Nutz-Datenrate zu verringern. Dieses ist nicht empfehlenswert, da einerseits bei kleinen Bandgeschwindigkeiten Probleme mit Reibung und Erschütterungen auftreten, andererseits aber auch jeweils am Ende des Bandes zur Umkehr eine gewisse Zeit benötigt wird, während der Daten nicht kontinuierlich zur Verfügung stehen. Dieses ließe sich durch Pufferung und kurzzeitig höhere Bandgeschwindigkeit ausgleichen.

### Intermittierende Aufzeichnung/Wiedergabe

Die Diskrepanz zwischen Brutto-Datenrate und Nutzdatenrate führt unmittelbar auf einen intermittierenden Betrieb mit Zwischenspeicherung, z.B. in einem Wechselpuffer oder einem kontinuierlichen Ringpuffer. Aus der oben errechneten Brutto-Datenrate und einer zweckmäßigen Größe eines solchen Puffers von z.B. 2 ... 4 Mbit, ergibt sich beispielsweise eine zweckmäßige Länge eines einzelnen Blocks auf dem Magnetband zu 6mm, entsprechend einer Zeitdauer von 0.1 sec bzw. einer Datenmenge von 1.28 Mbit. Dieser Block kann dann den Daten für Stereoton mit einer Echtzeit von etwa 4 Sekunden entsprechen. Der intermittierende Betrieb bedeutet also jeweils das Abwechseln zwischen 0.1 sec aktiver Bearbeitung eines Datenblocks auf dem band und etwa 3.9 sec Zeit für Positionierung auf den logisch folgenden Block, der nicht räumlich der folgende sein muß. Verschiedene Vorschläge für diese logische Anordnung können hierfür angeboten werden.

Jeder Block sollte eine eindeutige Adressierung tragen, wobei sowohl die Art der Adressierung als auch die Wiedergabefunktion so eingerichtet sein sollte, daß auch bei schnellem Bandlauf (Vor- Rückspulen) die Blöcke identifiziert werden können. Wenn Lesen und Schreiben in beiden Bandlaufrichtungen vorgesehen ist, dann kann es zweckmäßig sein, die Adressierungsdaten jeweils einmal am Anfang und einmal am Ende eines jeden Blocks vorzusehen.

Im folgenden werden anhand von Figuren die verschiedenen Lösungsmöglichkeiten aufgeführt.

### Version 1, Serpentinen Modus

Fig. 6 zeigt zunächst schematisch ein Bandstück mit N=4 Makro-Spuren, die jeweils in kurze Blöcke unterteilt und, zwischen denen Übergangszonen vorgesehen sind. Die Länge dieser Übergangszonen ist stark übertrieben dargestellt. Für einen Block ist ferner gezeigt, daß er sich aus M einzelnen, parallelen Spuren in Längsrichtung zusammensetzt. Ferner ist noch die Bearbeitungsrichtung entsprechend dem Serpentinen-Prinzip angedeutet. Es ist unmittelbar zu sehen, daß ein intermittierender Betrieb nur bei hohem Aufwand zu realisieren ist. Wenn z.B. nach dem 0.1 sec dauernden Lesen des Blocks Nr. 1 der Bandlauf für 3.9 sec angehalten werden muß, dann müssen entweder entsprechend lange Übergangszonen vorgesehen werden, innerhalb derer der Bandlauf stoppen und wieder starten kann (in Fig. 6 bei der Makro-Spur 2 gezeigt), oder es muß nach jedem Lesen das Band kurzzeitig zurückgespult werden, damit der Anfang des folgenden Blocks sicher gelesen werden kann (in Fig. 6 bei der Makro-Spur 3 gezeigt). Ebenso gilt dies natürlich für eine Aufzeichnung.

### Version 2, Zickzack Mode

Eine weitere mögliche Ausführungsform besteht darin, daß das Band jeweils nach jedem Block soweit zurückgespult wird, daß es wieder vor dem Block positioniert ist, und dann (vertikal) auf die folgende Makro-Spur zu positionieren. Dies ist in Fig. 7 gezeigt.

### Version 3, 'kleiner' Serpentinen-Modus

Die Anzahl der Positionierungen kann vermindert werden, wenn man sozusagen einen 'kleinen' Serpentinen-Mode verwendet (s. Fig. 8). Es ist unmittelbar zu sehen, daß es mehrere Versionen hinsichtlich der Anzahl der Makro-Spuren und der Behandlung an den unteren und oberen Umkehrpunkten geben kann. Gezeigt ist eine Version mit einer geraden Zahl N, bei der sich die auf die erste (Blöcke 1..4) folgende 'kleine' Serpentine (Blöcke 5..8) günstig anschließt.

### Version 4 kontinuierlicher Serpentinen Modus mit intermittierendem Betrieb

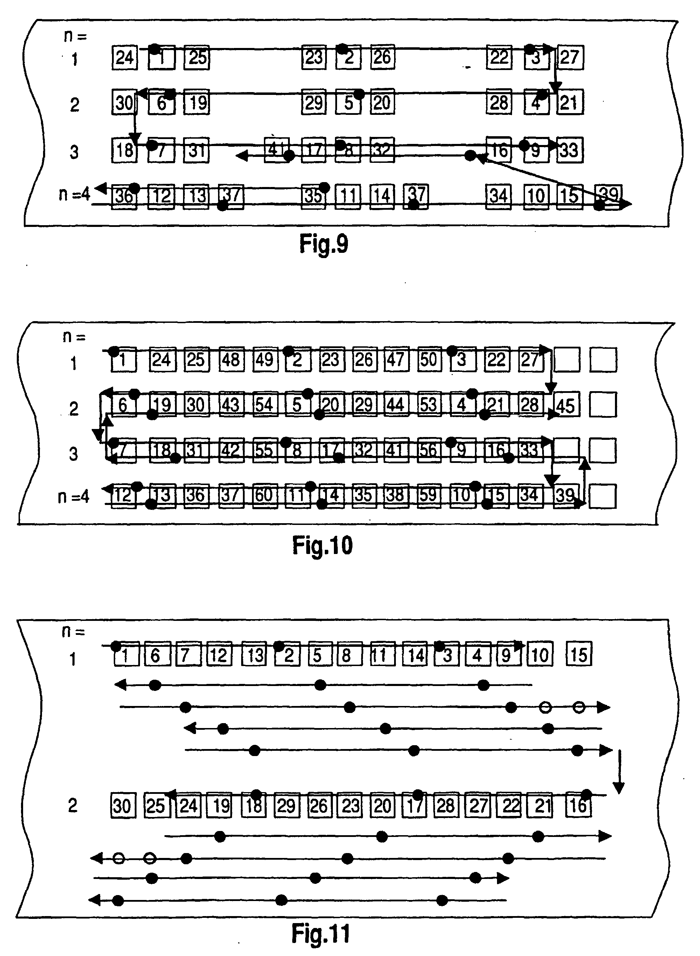

Eine weiterere Lösung besteht darin, eine gleichförmige Bandbewegung zu kombinieren mit intermittierender Aufzeichnung oder Wiedergabe. Dies ist zunächst in Fig. 9 gezeigt. Die Band-Kopf-Bewegung ist wieder durch Pfeile angedeutet, und die jeweils aktiven Blöcke sind durch Punkte markiert. Auch hier sind eine ganze Reihe unterschiedlicher Versionen möglich. Wichtig ist insgesamt, daß entweder die gesamte verfügbare Bandlänge entsprechend bearbeitet werden kann, oder daß kurze Bandstücke jeweils getrennt als Einheit betrachtet werden können.

In Fig. 9 ist jeweils ein Bandstück betrachtet, das bei den o.a. Parametern einer Länge von 3*4*60mm=720mm entspricht. Die Länge eines solchen Segments auf dem Band kann z.B. entsprechend einer Vorgabe für eine maximale Positionierzeit gewählt werden.

### Beschreibung des Ablaufs für unterschiedliche Betriebsarten:

### Schnelle Aufzeichnung und/oder Wiedergabe:

Entweder über die gesamte Breite des Bandes oder innerhalb nur einer Makro-Spur kann eine Schnellaufzeichnung oder -wiedergabe erreicht werden, wenn sämtliche benötigte Daten in einem Speicher zur Verfügung stehen, und wenn die Verwürfelung der Blöcke innerhalb diese Speichers vorgenommen wird. Bei dieser Betriebsart können die Übergangszonen sehr klein gehalten werden.

### Echtzeit-Aufzeichnung auf neues oder gelöschtes Band:

Kennzeichnend ist ein im Prinzip kontinuierlicher Bandlauf, eine Richtungsumkehr nach jeweils einer bestimmten Anzahl von Blöcken, und die Positionierung jeweils des nächsten zu schreibenden Blockes anhand bereits vorhandener, schon geschriebener Blöcke.

Die Aufzeichnung beginnt bei Block 1. Bei kontinuierlichem Bandlauf wird nach der vorher festgelegten Zeit (hier z.B. 3.9 sec) die Position des Blocks 2 erreicht und dieser geschrieben. Nach Schreiben von Block 3 (oder einer Reihe weiterer) wird die Bandlaufrichtung umgekehrt und auf die nächste Makro-Spur positioniert. Wenn der Bandlauf zum richtigen Zeitpunkt wieder gestartet wird, dann kann Block 4 ungefähr unter Block 3 geschrieben werden. Dies wird solange wiederholt, bis der letzte Block in der letzten Makro-Spur erreicht ist (hier Block 12). Dabnach wird nur die Bandlaufrichtung umgekehrt und der folgende Block (hier 13) in Bandlaufrichtung hinter den nächsten lesbaren (hier 12) geschrieben. Dies kann entsprechend fortgesetzt werden, bis die gesamte Bandfläche mit Blöcken angefüllt ist. Da jeder Block im Anschluß an einen schon geschriebenen Block geschrieben wird, ist aufgrund der Toleranzen bei der absoluten Bandgeschwindigkeit und des Abstandes zwischen Leseeinrichtung (zum Positionieren) und Schreibeinrichtung eine längere Übergangszone erforderlich.

### Echtzeit Wiedergabe

Die Wiedergabe erfolgt entsprechend bei kontinuierlicher Bandgeschwindigkeit und durch Detektieren des jeweils logisch folgenden Blockes. Auch hier wirkt sich der größer werdende Abstand der logisch folgenden Blöcke an den Umkehrpunkten nachteilig aus. Letzlich muß z.B. die Bandgeschwindigkeit an den Umkehrpunkten erhöht werden, damit rechtzeitig der nächste logische Block eingelesen werden kann.

Es kann darüberhinaus zweckmäßig sein, die jeweils ersten beiden Blöcke einer Tonaufzeichnung (also nicht nur 1+2, sondern z.B. auch 44+45) enger aufeinander folgen zu lassen, damit der Datenpuffer am Anfang einer Wiedergabe sicher gefüllt wird und nicht leer läuft. Dies kann aber auch durch entsprechend höhere Bandgeschwindigkeit ausgeglichen werden, die vom Puffer-Füllstand gesteuert wird.

### Version 5

Dies ist eine Weiterbildung der Version 4, die die zeitlichen Probleme and den Umkehrstellen vermeidet.

Kennzeichnend ist, daß bei einer erstmaligen Aufzeichnung nicht nur die Nutzblöcke, sondern auch gleich die dazwischenliegenden Blöcke mit Leerdaten, aber mit korrekter Adressangabe geschrieben werden. Am jeweiligen Ende werden nicht alle, aber mindestens zwei weitere leere Blöcke geschrieben, die dann im folgenden Durchlauf zur Positionierung benutzt werden können. Damit ist für jeden weiteren Durchlauf eine Positionierung zum Schreiben an jeder logischen Stelle möglich, ohne daß erhöhte Längen der Übergangsbereiche zum Ausgleich möglicher Toleranzen notwendig sind.

Der Ablauf wäre z.B. wie folgt (siehe Fig. 10): Im ersten Durchgang in der ersten Makro-Spur Blöcke 1,2,3 schreiben, die dazwischen liegenden Blöcke 24 .. 49 bzw. 23 .. 50 mit Leerdaten und Adressen schreiben, am Ende die zwei Blöcke 22 und 27 mit Leerdaten und Adressen schreiben.

Nach Richtungsumkehr und Spurpositionierung auf Makro-Spur 2 werden die zwei Blöcke 28 und 21 leer und dann Block 4 mit Nutzdaten geschrieben. Bei rechtzeitigem Start des Bandlaufs liegen diese Blöcke etwa unterhalb von 27, 22, und 3. Dies wird fortgesetzt bis zum Block 12 am Ende der Makro-Spur 4. Danach erfolgt nur eine Richtungsumkehr.

Bei allen folgenden Schreiboperationen können nun jeweils bereits geschreibene Blöcke zur Positionierung verwendet werden.

Block 12 dient zum Positionieren für Block 13, Block 11 für Block 14, Block 10 für Block 15. Danach wird jetzt ein weiterer Leerblock (39) hinter den schon vorhandenen Leerblock 34 geschrieben, damit wieder zwei am Ende vorhanden sind. Der bereits geschriebene Leerblock 33 wird zum Positionieren für Block 16 verwendet.

Auf diese Weise steht in jeder Spur und für jede Richtung immer mindestens ein Block (leer oder mit Nutzdaten, aber mit korrekter Adresse) zur Verfügung, der zum Positionieren für den jeweils nächsten zu schreibenden Block verwendet werden kann. Die zum Richtungsumkehren und Spurumschalten zur Verfügung stehende Zeit wird bei diesem Vorschlag zusätzlich maximal zum Bearbeiten von 4 Blöcken benötigt. Damit können an den Spurenden keine Zeitprobleme mehr auftreten.

### Version 6

Diese Version ist eine Weiterbildung der Version 5, bei der eine weitere Energieeinsparung durch Verminderung der Spur-Positioniervorgänge erfolgt. Kennzeichnend ist, daß zunächst eine Makro-Spur vollständig gefüllt wird, bevor eine weitere Spur benutzt wird. Dies ist in Fig. 11 dargestellt.

Kennzeichnend ist wieder, daß am Ende einer Spur mindestens zwei Leerblöcke gechrieben werden, die nach Richtungsumkehr zum Positionieren für den nächsten Schreibvorgang verwendet werden.

Es ist leicht zu sehen, daß eine ungerade Anzahl von Blöcken (wie dargestellt) dazu führt, daß die Schreib/Leseeinrichtung am Ende der Spur steht, wenn diese ganz gefüllt ist. Danach kann dann die nächste Spur in umgekehrter Richtung aufgebaut werden (wie dargestellt). Eine gerade Anzahl von Blöcken führt dazu, daß die Schreib/Leseeinrichtung nach einer kompletten Bearbeitung einer Spur wieder an deren Anfang steht. Dann kann die nächste Spur in gleicher Richtung aufgebaut werden, woraufhin immer wieder zum Anfang des Bandstücks zurückgekehrt wird.

Bei einer ungeraden Anzahl von Blöcken ist es zusätzlich noch wichtig, ob die Anzahl der Makro-Spuren gerade oder ungerade ist.

Bei ungerader Spuranzahl steht die Schreib/Leseeinrichtung bei völlig gefülltem Band schließlich wieder am Ende des Bandes oder Bandstückes, was für weitere Schreib- oder Lesevorgänge auf folgenden Bandstücken vorteilhaft sein kann, aber längere Positionierdauer zurück zum Anfang bedeutet.

Bei gerader Spuranzahl steht die Schreib/Leseeinrichtung bei völlig gefülltem Band schließlich wieder am Anfang des Bandes, was eine geringe Positionierdauer zum Anfang, aber eine längere Pause für eine weitere Bearbeitung eines folgenden Bandstücks bedeutet.

Die Frage, wo die Schreib/Leseeinrichtung nach der völligen Bearbeitung einer Spur steht, ist aber ohne große Auswirkung, wenn genügend Zeit für eine Positionierung und einen Vor-Rückspulvorgang zur Verfügung steht. Für einen kontinuierlichen Wiedergabevorgang der auf einem Bandabschnitt aufgezeichneten Musik kann es vorteilhaft sein, wenn sich auch mechanisch ein kontinuierlicher Vorgang ergibt. Für den Fall einer Echtzeit-Eigenaufnahme könnte man den absolut letzten Durchgang weglassen, wobei man für einen geringen Verlust an Speicherplatz die Möglichkeit erhält, direkt auf dem nächstfolgenden Magnetbandstück weiterzumachen.

Die beschriebene Version 6 hat zusätzlich den Vorteil, daß eine 'gemäßigte' Schnellaufzeichnung, z.B. nur unter Verwendung von einem 64-Spur Kopf, makro-spurweise erfolgen kann, wobei nur die für diese Spur erforderlichen Daten im Aufzeichnungsgerät in einem Speicher zum Verwürfeln zur Verfügung stehen müssen.

Aus den o.a. Ausführungen ergibt sich, daß für SDCR-Audio Album die beschriebene Version 6, zweckmäßigerweise verwendet werden sollte. Blockzahl und Spurzahl sind hier gerade. Insgesamt können mehrere Formate definiert werden:

### Format für Schnellaufzeichnung mit Datenreduktion

Hier werden die Blöcke entsprechend Fig. 11 in den einzelnen Spuren vorgesehen. Die Abstände zwischen den Blöcken können so gering gehalten werden, wie dies für eine direkte komplette Aufzeichnung und eine sequentielle Leseoperation erforderlich ist.

Entsprechend den o.a Parametern könnte man auf einem 6x24 cm langen Bandstück 6x40 Blöcke mit einer Länge von 6 mm unterbringen. Dies würde pro Spur eine Spielzeit von 16 min und insgesamt von N x 16 min ergeben.

### Format für Eigenaufzeichnung mit Datenreduktion

Bei Eigenaufzeichnung müßte vorgegangen werden, wie es zu Version 6 beschrieben wurde. Da zum Positionieren, Löschen und Aufzeichnen jeweils Sicherheitsabstände und auch Run-in Sequenzen für die PLL erforderlich sind, können insgesamt weniger Blöcke pro Spur untergebracht werden. Bei sonst gleichem Bandlauf wären z.B. auf der gleichen Länge von 6x24 cm nur 6x30 Blöcke unterzubringen. Die Eigenaufnahme würde dann zu einer Verkürzung der Aufnahmedauer pro Bandstück führen, aber bei prinzipiell gleichem Bandlauf.

### Format für Eigenaufnahme ohne Datenreduktion

Ohne Datenreduktion, d.h. im 16 bit CD Format, sind etwa um den Faktor 6 höhere Datenmengen aufzubringen. Dies kann man wiederum bei prinzipiell gleichem Bandlauf durch dichtere Folge der logisch hintereinander folgenden Blöcke auf dem Band erreichen. Wenn oben alle 4 sec ein neuer Block geschrieben oder gelesen werden muß, so ist es hier dann alle 4/6 sec. Das heißt, die logisch zusammengehörenden Blöcke sind nicht mehr 24 cm voneinander entfernt, sondern nur noch 4 cm. Mit Sicherheitsabständen zu den Nachbarblöcken sind dann nicht mehr 30, sondern z.B. 5 unterzubringen.

Bei ansonsten gleichem Bandlauf verkürzt sich so die Aufzeichnungsdauer entsprechend dem Faktor der Datenreduktion.

### Weitere Formate

Die vorgeschlagene Form der kontinuierlichen Bandbewegung, zusammen mit der intermittierenden Schreib- und Leseoperation, kann ohne weiteres an weitere Datenformate und -raten angepaßt werden.

## Patentansprüche

1. Tragbares Magnetbandgerät (MP), mit einem Magnetband (T) auf eigenen Bandtellern (MT) für die Aufzeichnung und Wiedergabe von Signalen, bei dem die Aufzeichnung einer Vielzahl parallel zur Bandkante verlaufender Spuren gleichzeitig erfolgt und bei dem während der Wiedergabe eine Vielzahl von Spuren gleichzeitig gelesen wird, wobei das Gerät mit eigenen Lesekopf (RH) und Auswerteelektronik (AE) für die Wiedergabe ausgerüstet ist , und das Band mit externen Aufzeichnungsköpfen (SK) bespielt werden kann , indem das Gerät an eine externe Aufzeichnungseinrichtung (A) anschließbar ist.

2. Tragbares Magnetbandgerät nach Anspruch 1, **dadurch gekennzeichnet, daß** es eine eigene Aufzeichnungselektronik (EN, ECC-M, ME, D) und einen eigenen Aufzeichnungskopf (SK-Fig.2) enthält.

3. Tragbares Magnetbandgerät nach Anspruch 2, **dadurch gekennzeichnet, daß** es einen Datenverschachtelungblock (ME-IN) und einen Datenentschachtelungblock (ME-OUT) enthält.

4. Tragbares Magnetbandgerät nach Anspruch 1, **dadurch gekennzeichnet, daß** mit dem externen Aufzeichnungskopf alle für das Band vorgesehenen Signalspuren gleichzeitig aufgezeichnet werden.

5. Tragbares Magnetbandgerät nach Anspruch 1 oder 2, **dadurch gekennzeichnet, daß** der interne Wiedergabe Kopf jeweils nur einen Teil der auf dem Band befindlichen Spuren liest und auf veschiedene Spurbereiche einstellbar ist.

6. Tragbares Magnetbandgerät nach Anspruch 3, **dadurch gekennzeichnet, daß** das Gerät einen internen Aufzeichnungskopf besitzt, der nur einen Teil der für das Band vorgesehenen Signalspuren gleichzeitig aufzeichnen kann und der auf verschiedene Spurbereiche einstellbar ist.

7. Tragbares Magnetbandgerät nach Anspruch 3 oder 4, **dadurch gekennzeichnet, daß** bei der Wiedergabe und/oder bei der Aufzeichnung in Echzeit das Band im Start/Stop-Betrieb läuft.

8. Tragbares Magnetbandgerät nach Anspruch 5, **dadurch gekennzeichnet, daß** das Gerät einen Pufferspeicher für die Zeitliche Expansion bzw. Kompression enthält.

9. Aufzeichungsverfahren für ein tragbares Magnetbandgerät nach einer der vorhergehenden Ansprüche , **dadurch gekennzeichnet, daß** die parallelen Spuren in unterschiedlichen Schreib- und Leserichtungen beschrieben werden.

## Claims

1. Portable magnetic tape apparatus (MP), with a magnetic tape (T) on separate tape plates (MT), for the recording and reproduction of signals, in which the recording of a multiplicity of tracks running parallel to the edge of the tape takes place simultaneously and in which, during playback, a multiplicity of tracks are read simultaneously, the apparatus being equipped with a separate reading head (RH) and evaluating electronics (AE) for reproduction and it being possible for the tape to be recorded onto by means of external recording heads (SK) by the apparatus being connected to an external recording facility (A).

2. Portable magnetic tape apparatus according to Claim 1, **characterized in that** it contains separate recording electronics (EN, ECC-M, ME, D) and a separate recording head (SK-Fig. 2).

3. Portable magnetic tape apparatus according to Claim 2, **characterized in that** it contains a data interleaving block (ME-IN) and a data deinterleaving block (ME-OUT).

4. Magnetic tape apparatus according to Claim 1, **characterized in that** with the external recording head all the signal tracks intended for the tape are recorded simultaneously.

5. Portable magnetic tape apparatus according to Claim 1 or 2, **characterized in that** the internal playback head reads in each case only some of the tracks located on the tape and can be set to various track regions.

6. Magnetic tape apparatus according to Claim 3, **characterized in that** the apparatus has an internal recording head, which can record simultaneously only some of the signal tracks intended for the tape and which can be set to various track regions.

7. Magnetic tape apparatus according to Claim 3 and/or 4, **characterized in that** in the case of reproduction and/or recording in real time the tape runs in start/stop mode.

8. Magnetic tape apparatus according to Claim 5, **characterized in that** the apparatus includes a buffer store for the expansion or compression with respect to time.

9. Recording process for a portable magnetic tape apparatus according to one of the preceding claims, **characterized in that** the parallel tracks are recorded in different writing and reading directions.

## Revendications

1. Appareil à bande magnétique portable (MP), comprenant une bande magnétique (T) sur ses propres bobines de bande (MT) pour l'enregistrement et la restitution de signaux, avec lequel l'enregistrement s'effectue simultanément sur une pluralité de pistes qui s'étendent parallèlement au bord de la bande et avec lequel une pluralité de pistes est lue simultanément pendant la restitution, l'appareil étant équipé de sa propre tête de lecture (RH) et d'un circuit électronique d'analyse (AE) pour la restitution et la bande pouvant être lue avec des têtes d'enregistrement externes (SK) en raccordement l'appareil à un équipement d'enregistrement (A) externe.

2. Appareil à bande magnétique portable selon la revendication 1, **caractérisé en ce qu'**il comprend son propre circuit électronique d'enregistrement (EN, ECC-M, ME, D) et sa propre tête d'enregistrement (SK-Fig. 2).

3. Appareil à bande magnétique portable selon la revendication 2, **caractérisé en ce qu'**il comprend un bloc d'entrelacement des données (ME-IN) et un bloc de désentrelacement des données (ME-OUT).

4. Appareil à bande magnétique portable selon la revendication 1, **caractérisé en ce que** toutes les pistes de signal prévues pour la bande sont enregistrées simultanément avec la tête d'enregistrement externe.

5. Appareil à bande magnétique portable selon la revendication 1 ou 2, **caractérisé en ce que** la tête de restitution interne ne lit à chaque fois qu'une partie des pistes qui se trouvent sur la bande et elle est réglable sur différentes plages de pistes.

6. Appareil à bande magnétique portable selon la revendication 3, **caractérisé en ce que** l'appareil possède une tête d'enregistrement interne qui ne peut enregistrer simultanément qu'une partie des pistes de signal prévues pour la bande et qui peut être réglée sur différentes plages de pistes.

7. Appareil à bande magnétique portable selon la revendication 3 ou 4, **caractérisé en ce que** lors de la restitution et/ou lors de l'enregistrement en temps réel, la bande fonctionne en mode départ/arrêt.

8. Appareil à bande magnétique portable selon la revendication 5, **caractérisé en ce que** l'appareil comprend une mémoire tampon pour l'expansion ou la compression dans le temps.

9. Procédé d'enregistrement pour un appareil à bande magnétique portable selon l'une des revendications précédentes, **caractérisé en ce que** les pistes parallèles sont enregistrées dans des sens d'écriture et de lecture différents.
